(19) Europäisches Patentamt
European Patent Office
Office européen des brevets

(11) Numéro de publication: **0 188 967**
**B1**

(12) # FASCICULE DE BREVET EUROPEEN

(45) Date de publication du fascicule du brevet: **24.05.89**

(51) Int. Cl.⁴: **C 07 F 7/08**, C 07 F 7/12

(21) Numéro de dépôt: **85402620.0**

(22) Date de dépôt: **24.12.85**

(54) **Procédé de préparation d'hydrogeno- ou d'halogenosilanes.**

(30) Priorité: **27.12.84 FR 8419884**

(43) Date de publication de la demande: **30.07.86 Bulletin 86/31**

(45) Mention de la délivrance du brevet: **24.05.89 Bulletin 89/21**

(84) Etats contractants désignés: **AT BE CH DE GB IT LI LU NL SE**

(56) Documents cités:
**FR-A- 1 427 512**
**FR-A- 1 433 678**

(73) Titulaire: **CENTRE NATIONAL DE LA RECHERCHE SCIENTIFIQUE (CNRS), 15, Quai Anatole France, F-75007 Paris (FR)**

(72) Inventeur: **Corriu, Robert, 246, rue de L'Espérou, F-34100 Montpellier (FR)**
Inventeur: **Cerveau, Geneviève, Clos St Joseph C 749 Avenue du Pic Saint Loup, F-34100 Montpellier (FR)**
Inventeur: **Chuit, Claude, Route de Saunière, F-30250 Junas (FR)**
Inventeur: **Reye, Catherine, Résidence Le Bussy d'Amboise 160 Rue d'Alco, F-34000 Montpellier (FR)**

(74) Mandataire: **Warcoin, Jacques et al, Cabinet Régimbeau 26, avenue Kléber, F-75116 Paris (FR)**

**EP 0 188 967 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne la préparation d'hydrogéno- ou halogénosilanes répondant à la formule générale I:

$$R\text{–}Si\,R_3' \qquad (I)$$

dans laquelle:

R représente un atome d'hydrogène ou de chlore ou un radical alcoyle, alcényle, alcynyle, aryle, aralcoyle, aralcényle, aralcynyle ou alcoylaryle, dans lesquels les fragments aliphatiques sont linéaires ou ramifiés et contiennent de 1 à 200 atomes de carbone, et

R' représente un atome d'hydrogène ou de chlore.

Dans l'ensemble de la présente description, les radicaux aryle et les fragments aromatiques des radicaux aralcoyle, aralcényle, aralcynyle et alcoylaryle désignent des radicaux phényle et naphtyle.

Les silanes sont habituellement préparés par chauffage du silicium élémentaire avec un halogénure d'alcoyle ou d'aryle en présence d'un catalyseur à base de cuivre. Une telle réaction de synthèse directe présente l'inconvénient de conduire le plus souvent à des mélanges de divers produits. C'est ainsi que la réaction du silicium sur le chlorure de méthyle donne naissance à un mélange de méthylchlorosilanes conformément au schéma réactionnel suivant:

$$CH_3Cl + Si \xrightarrow[300\,°C]{Cu\,(10\%)} SiCl_4 + CH_3SiHCl_2 + CH_3SiCl_3 + (CH_3)_2SiCl_2$$

En revanche, la présente invention permet d'obtenir des silanes très divers, de façon spécifique avec un excellent degré de pureté et avec d'excellents rendements. De tels silanes sont pour la plupart connus, et sont utiles par exemple en tant qu'agents de réticulation dans des compositions organopolysiloxaniques.

Le procédé de l'invention est caractérisé en ce que l'on fait réagir un complexe du silicium répondant à la formule générale II:

a 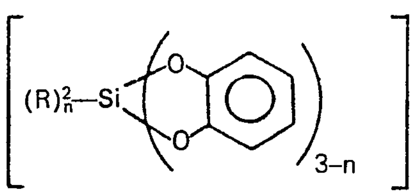 $x^{\ominus}$ b $A^{y\oplus}$ (II)

dans laquelle:

$R^2$ représente un radical alcoyle, alcényle, alcynyle, aryle, aralcoyle, aralcényle, aralcynyle ou alcoylaryle, dans lesquels les fragments aliphatiques sont linéaires ou ramifiés et contiennent de 1 à 20 atomes de carbone,

A représente un métal alcalin ou alcalino-terreux,

n = 0 ou 1

a, b, x et y = 1 ou 2,

à la condition que: lorsque n = 0, x = 2
lorsque n = 1, x = 1

et en respectant l'équation de neutralité électrique:

$$ax = by$$

avec un agent réducteur ou un agent oxydant halogéné dans un milieu solvant anhydre et sous atmosphère inerte, puis en ce que l'on effectue une hydrolyse acide, et en ce qu'on extrait ledit composé de formule I.

Certains de ces produits de départ ainsi que leur méthode de préparation sont décuts dans EP-A-191 259 et EP-A-191 260 déposés le même jour que la présente demande.

Selon un mode de mise en œuvre particulier du procédé de l'invention, le complexe de silicium de départ est un complexe hexacoordiné de formule générale IIa:

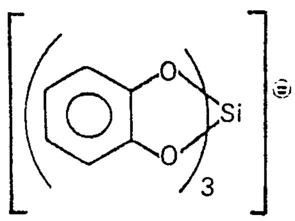 $(p+1)A^{(2-p)\oplus}$ (IIa)

dans laquelle:

A représente un métal alcalin ou alcalino-terreux, et

p = 0 ou 1.

Selon une autre variante de mise en œuvre du procédé de l'invention, le complexe de silicium de départ est un complexe pentacoordiné de formule générale IIb:

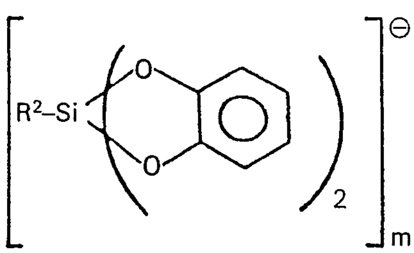 $A^{m\oplus}$ (IIb)

dans laquelle:

$R^2$ désigne un radical alcoyle, alcényle, alcynyle, aryle, aralcoyle, aralcényle, aralcynyle ou alcoylaryle, dans lesquels les fragments aliphatiques sont linéaires ou ramifiés et contiennent de 1 à 20 atomes de carbone,

A représente un métal alcalin ou alcalino-terreux, et

m = 1 ou 2.

Chacun de ces complexes de formule II a ou IIb peut être traité avec un agent réducteur, par exemple choisi parmi les hydrures, tels que l'aluminohydrure de lithium, le diisobutylaluminium hydrure, l'hydrure de sodium associé à un trialcoylaluminium, notamment le triéthylaluminium, pour conduire à divers trihydrogénosilanes ou même au silane $SiH_4$.

Chacun des complexes de formule IIa ou IIb peut également être mis à réagir avec un agent oxydant halogéné choisi parmi le chlore, l'acide chlorhydrique sous pression, $PCl_3$, $PCl_5$, $POCl_3$, et $SOCl_2$, pour conduire à divers halogénosilanes, en particulier des trichlorsilanes. A partir du complexe de formule II, il est possible d'obtenir, par réaction avec $PCl_5$ ou $SOCl_2$ ou HCl sous pression, du tétrachlorure de silicium.

Les complexes de formule générale II, peuvent par exemple être préparés comme indiqué dans les exemples 1 à 9 suivants. Dans la mesure où ces complexes ne constituent pas per se l'objet de l'invention, il convient de rappeler qu'ils sont cités à simple titre d'illustration.

Exemple 1

Préparation du tris(benzènediolato-1,2)silicate de sodium

Les préparations sont effectuées sous azote dans un tube de Schlenk avec des solvants dégazés pour éviter l'oxydation du catécholate de sodium.

a) à partir du silicate de méthyle

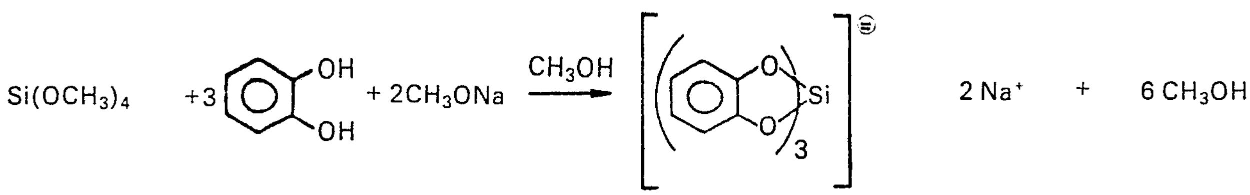


6,4 g (0,278 mole) de sodium sont dissous dans 80 ml de méthanol. On ajoute ensuite 22,5 g (0,148 mole) de silicate de méthyle dissous dans 20 ml de méthanol , puis 47,5 g (0,432 mole) de pyrocatéchol dissous dans 50 ml de méthanol. Durant l'introduction du pyrocatéchol, le mélange réactionnel devient laiteux, puis homogène. On chauffe pendant 1 h à 60 °C. Le méthanol est ensuite chassé sous vide et le complexe lavé à l'éther pour éliminer l'excès de silicate de méthyle et de pyrocatéchol. On filtre à l'air, lave le complexe 2 fois à l'éther. Le complexe est séché sous vide à 150 °C pendant 30 heures pour éliminer entièrement l'éther (l'éther est fortement adsorbé sur le complexe).

On obtient ainsi 54,5 g (0,137 mole, 98%) d'une poudre blanche amorphe stable à l'air qui ne fond pas à 300 °C. Ce complexe est soluble dans le THF, le méthanol et la pyridine et insoluble dans les autres solvants usuels.

Caractéristiques spectrales:

$^{13}C$ RMN ($CD_3OD$) $\delta$=151,3; 118,6;
(Référence TMS) 111,7 ppm
$^{29}Si$ RMN ($CD_3OD$) $\delta$=−113 ppm.

b) à partir de la silice

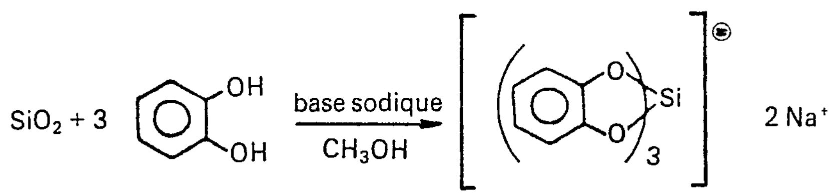


En opérant dans les mêmes conditions générales qu'à l'exemple 1a, mais en remplaçant le silicate de méthyle par de la silice ou par un gel de silice, on obtient, avec un rendement de 70%, le même complexe de coordination en chauffant le mélange réactionnel pendant 18 heures à 60 °C.

Exemple 2

Préparation du tris(benzènediolato-1,2)silicate de lithium

En opérant de la même manière qu'aux exemples 1a) et 1b) et en utilisant le méthylate de lithium, on obtient le complexe lithié correspondant. En partant du silicate de méthyle, le rendement de la réaction est quantitatif (95–100%).

Exemple 3

Préparation du tris(benzènediolato-1,2)silicate de magnésium

En opérant de la même manière qu'aux exemples 1a) et 1b) et en utilisant le méthylate de magnésium, on obtient le complexe magnésié correspondant. En partant du silicat méthyle, le rendement de la réaction est quantitatif (95–100%).

Exemple 4

Préparation du bis(benzènediolato-1,2)-méthylsilicate de sodium

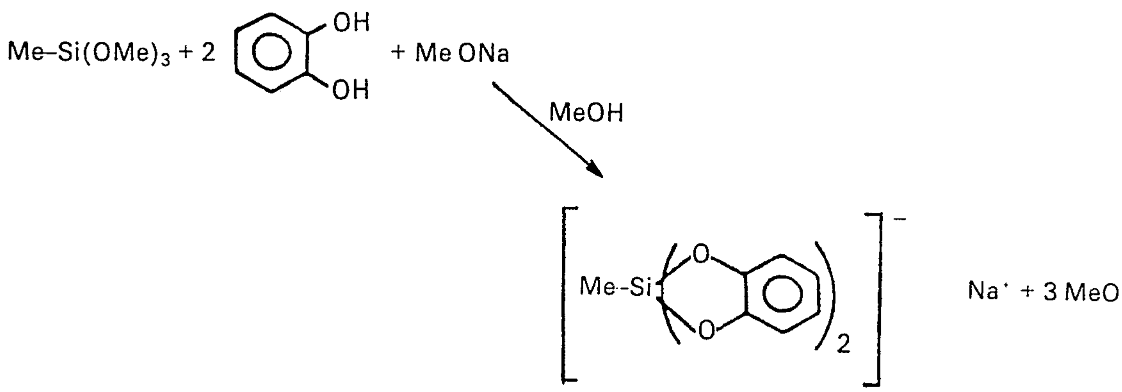


La préparation est effectuée sous azote dans un tube de Schlenk avec des solvants dégazés.

1,09 g de sodium (0,0475 mole) est dissous dans 15 ml de méthanol. 6,47 g de $MeSi(OMe)_3$ (0,0475 mole) dilué dans 10 ml de méthanol sont additionnés rapidement à température ambiante. On ajoute ensuite 10,34 g de pyrocatéchol (0,094 mole) dissous dans 20 ml de méthanol, goutte à goutte et à température ambiante. Le mélange réactionnel est chauffé pendant environ 4 heures à 45 °C. Le méthanol est chassé sous vide. Le complexe est ensuite lavé 2 fois à l'éther sous azote pour éliminer le pyrocatéchol et Me-$Si(OMe)_3$ n'ayant pas réagi. La solution est filtrée sous azote. Le complexe est séché sous vide à 100 °C pendant une journée pour éliminer l'éther. On obtient 12 g de complexe (rendement 90%). Le complexe obtenu sous forme de poudre doit être conservé sous azote. Il est soluble dans le méthanol et le DMSO.

Caractéristiques spectrales:

$^{13}C$ RMN ($CD_3OD$) 4 signaux

Référence TMS: $\delta$ =151,6; 120,8; 113,2; 1,2 ppm $^{29}Si$ RMN ($CD_3OD$) $\delta$= −73,7 ppm

Exemple 5

Préparation du bis(benzènediolato-1,2)-méthylsilicate de potassium

Selon un mode opératoire identique à celui de l'exemple 1, on obtient à partir de méthylate de potassium le complexe stable à l'air de formule:

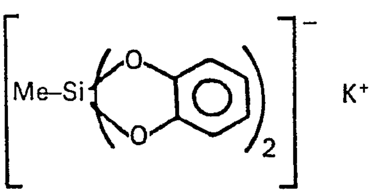

Exemple 6

Préparation du bis(benzènediolato-1,2)-vinylsilicate de potassium

Selon un mode opératoire identique à celui de l'exemple 1, on obtient à partir de 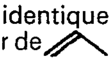 $Si(OMe)_3$ et de MeOK le complexe stable à l'air de formule:

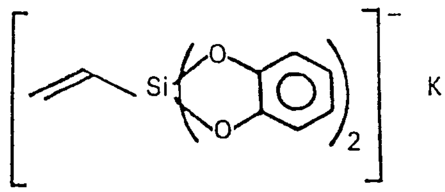

Exemple 7

Préparation du bis(benzènediolato-1,2)-phénylsilicate de sodium

Selon un mode opératoire identique à celui de l'exemple 1, on obtient à partir de 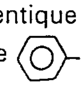-$Si(OMe)_3$ et de MeONa le complexe stable de formule:

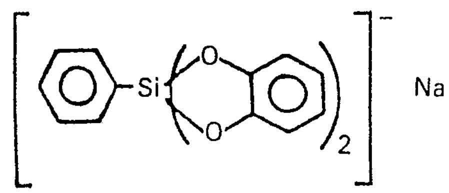

Exemple 8

Préparation du bis(benzènediolato-1,2)-benzylsilicate de sodium

Selon un mode opératoire identique à celui de l'exemple 1, on obtient à partir de 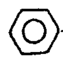-$CH_2$- $Si(OMe)_3$ et de MeONa le complexe stable à l'air de formule:

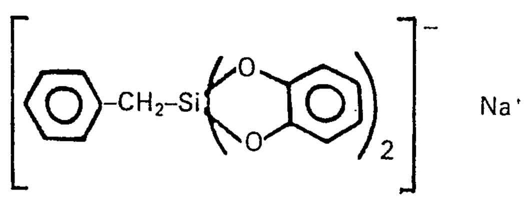

Exemple 9

Préparation du bis(benzènediolato-1,2)(naphtyl-1)silicate de sodium

Selon un mode opératoire identique à celui de l'exemple 1, on obtient à partir de $Si(OMe)_3$

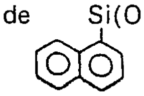

et de MeONa le complexe stable de formule:

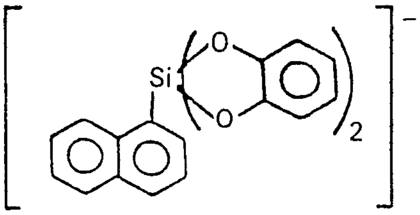

Na+

Exemple 10
Reduction de bis (benzènediolato- 1,2)-$\alpha$-naphtylsilicate de sodium par $LiAlH_4$

Les réactions sont conduites sous azote avec des réactifs et des solvants dégazés.

7,88 g de bis(benzènediolato-1,2)-$\alpha$-naphtylsilicate de sodium (20 mmoles) sont mis en suspension dans 50 ml d'éther anhydre et ajoutés à une suspension de 2 g de $LiAlH_4$ (52 mmoles) dans 30 ml d'éther anhydre. Le milieu réactionnel est laissé sous agitation à la température ambiante pendant 4 heures. On hydrolyse avec HCl(4N). On extrait 3 fois la phase aqueuse à l'éther. Les phases éthérées réunies sont lavées à la soude pour éliminer le pyrocathécol, à l'eau et au chlorure de sodium saturé jusqu'à neutralité, puis séchées sur $MgSO_4$. 2,3 g d'$\alpha$-naphtylsilane (rendement 73%) sont obtenus après distillation Eb 135–140°/25 mm Hg.

Exemple 11
Réduction de bis(benzènediolato-1,2)-phénylsilicate de sodium par $LiAlH_4$

En opérant comme dans l'exemple 10, à partir de 6,88 g de bis(benzènediolato-1,2)-phénylsilicate de sodium (20 mmoles) on obtient 1,5 g de phénylsilane (rendement 72%) Eb: 120°/760 mmHg.

Exemple 12
Réduction de bis(benzènediolato-1,2)-phénylsilicate de sodium par $NaH/Et_3Al$

Les réactions sont faites sous azote avec des réactifs et des solvants dégazés.

Le complexe $Et_3Al/NaH$ est préparé par addition de 2,01 g de NaH à 80% en suspension dans l'huile (66 mmoles) à 75 ml de solution 0,6 M de $Et_3Al$ dans l'hexane (45 mmoles). Ce mélange est agité pendant 1/4 heure à la température ambiante. Ce mélange est ensuite porté à 0 °C et on ajoute une suspension de 5,16 g de bis(benzènediolato-1,2)-phénylsilicate de sodium (15 mmoles) dans 50 ml d'hexane anhydre. Le mélange réactionnel est ensuite abandonné pendant 1 heure sous agitation à la température ambiante. Au bout de ce temps, le milieu est limpide et une gomme grise est collée au fond du tube de Schlenk. On hydrolyse à froid très lentement par HCl 4N jusqu'à pH acide. On extrait à l'hexane et lave à l'eau jusqu'à neutralité. On sèche sur $MgSO_4$. 0,97 g de phénylsilane (rendement 60%) sont obtenus après distillation. Note: Ce rendement peut être amélioré car le phénylsilane est en partie entraîné par l'hexane.

Exemple 13
Réduction de bis(benzènediolato-1,2)-$\alpha$-naphtyl silicate de sodium par $NaH/Et_3Al$

En opérant comme dans l'exemple 12, à partir de 4 g de bis(benzènediolato-1,2)-$\alpha$- naphtylsilicate de sodium (10 mmoles) on obtient 1,02 g d'$\alpha$-naphtylsilane (rendement 65%).

Exemple 14
Réduction de bis (benzènediolato-1,2)-phénylsilicate de sodium par l'hydrure de diisobutylaluminium

La réaction est effectuée sous azote avec des réactifs et solvants dégazés.

100 ml de solution M d'hydrure de diisobutylaluminium dans l'hexane (100 mmoles) sont portés à 0 °C. On ajoute une suspension de 6,88 g de bis(benzènediolato-1,2)-phényl silicate de sodium (20 mmoles) dans le chlorure de méthylène. Le milieu réactionnel est agité pendant 4 heures à la température ambiante (test: il y a un excès d'hydrure). On hydrolyse alors par HCl 4N (réaction à froid très violente) jusqu'à pH acide. Le milieu est extrait au chlorure de méthylène. Les phases organiques réunies sont lavées à la soude pour éliminer le pyrocatéchol, puis à l'eau et au chlorure de sodium saturé jusqu'à neutralité. On sèche sur $MgSO_4$.

1,4 g de phénylsilane (rendement 65%) sont obtenus après distillation. Eb: 120°/760 mmHg.

Remarque: lors de l'élimination du solvant à la pression atmosphérique, une quantité non négligeable de phénylsilane est entraînée (contrôle CPV). Le rendement observé peut donc être amélioré.

## Revendications

1. Procédé de préparation d'hydrogéno- ou halogénosilanes de formule générale I:

$$R\text{–}Si\ R_3' \quad (I)$$

dans laquelle:

R représente un atome d'hydrogène ou de chlore ou un radical alcoyle, alcényle, alcynyle, aryle, aralcoyle, aralcényle, aralcynyle ou alcoylaryle, dans lesquels les fragments aliphatiques sont linéaires ou ramifiés et contiennent de 1 à 20 atomes de carbone,

R' représente un atome d'hydrogène ou de chlore, caractérisé en ce que l'on fait réagir un complexe du silicium répondant à la formule générale II:

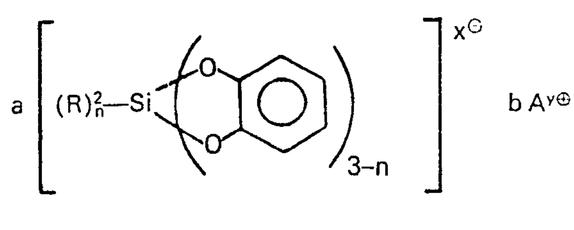

(II)

dans laquelle:

$R^2$ représente un radical alcoyle, alcényle, alcynyle, aryle, aralcoyle, aralcényle, aralcynyle ou alcoylaryle, dans lesquels les fragments aliphatiques sont linéaires ou ramifiés et contiennent de 1 à 20 atomes de carbone,

A représente un métal alcalin ou alcalino-terreux,

n = 0 ou 1

a, b, x et y = 1 ou 2,

à la condition que: lorsque n= 0, x = 2
lorsque n =1, x = 1

et en respectant l'équation de neutralité électrique:

$$ax = by$$

avec un agent réducteur ou un agent oxydant halogéné dans un milieu solvant anhydre et sous atmosphère inerte, puis en ce que l'on effectue une hydrolyse acide, et en ce qu'on extrait ledit composé de formule I.

2. Procédé selon la revendication 1, caractérisé en ce que l'on utilise un complexe du silicium hexacoordiné de formule générale IIa:

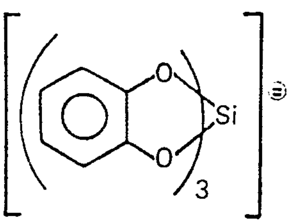

$(p+1)A^{(2-p)\oplus}$ (IIa)

dans laquelle:

A représente un métal alcalin ou alcalino-terreux, et

p = 0 ou 1.

3. Procédé selon la revendication 1, caractérisé en ce que l'on utilise un complexe du silicium pentacoordiné de formule générale IIb:

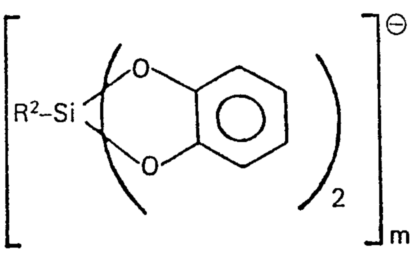

$A^{m\oplus}$ (IIb)

dans laquelle:

$R^2$ désigne un radical alcoyle, alcényle, alcynyle, aryle, aralcoyle, aralcényle, aralcynyle ou alcoylaryle, dans lesquels les fragments aliphatiques sont linéaires ou ramifiés et contiennent de 1 à 20 atomes de carbone,

A représente un métal alcalin ou alcalino-terreux, et

m = 1 ou 2.

4. Procédé selon la revendication 1, caractérisé en ce que l'agent réducteur est choisi parmi les hydrures, tels que l'aluminohydrure de lithium, l'hydrure de diisobutylaluminium, l'hydrure de sodium associé à un trialcoylaluminium, notamment le triéthylaluminium.

5. Procédé selon la revendication 1, caractérisé en ce que l'agent oxydant halogéné est choisi parmi le chlore, l'acide chlorhydrique, $PCl_3$, $PCl_5$, $POCl_3$, $SOCl_2$.

## Patentansprüche

1. Verfahren zur Herstellung von Wasserstoff- oder alogen-Silanen der allgemeinen Formel I:

$$R\text{-}Si\,R_3' \qquad (I)$$

worin:

R ein Wasserstoff- oder Chloratom oder einen Alkyl-, Alkenyl-, Alkinyl-, Aryl-, Aralkyl-, Aralkenyl, Aralkinyl-, oder Alkylarylrest bedeutet, bei denen die aliphatischen Reste geradkettig oder verzweigt sind und 1 bis 20 Kohlenstoffatome enthalten,

R' ein Wasserstoff- oder Chloratom bedeutet, dadurch gekennzeichnet, dass man reagieren lässt einen Siliciumkomplex mit der allgemeinen Formel II:

a 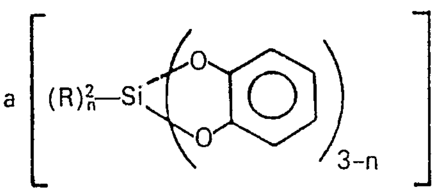 $x^{\ominus}$ b $A^{y\oplus}$

(II)

worin:

$R^2$ einen Alkyl-, Alkenyl-, Alkinyl-, Aryl, Aralkyl-, Aralkenyl-, Aralkinyl-, oder Alkylarylrest bedeutet, bei denen die aliphatischen Reste geradkettig oder verzweigt sind und 1 bis 20 Kohlenstoffatomen enthalten,

A ein Alkali- oder Erdalkalimetall bedeutet,

n = 0 oder 1,

a, b, x und y = 1 oder 2,

mit der Bedingung, dass: wenn n = 0, x = 2
wenn n = 1, x = 1

und dabei die Elektroneutralitätsgleichung erfüllen:

$$ax = by$$

mit einem Reduktionsmittel oder einem halogenierten Oxidationsmittel in einem wasserfreien Lösungsmittelmilieu und unter einer inerten Atmosphäre, worauf man dann eine saure Hydrolyse durchführt, und woraus man die besagte Verbindung der Formel I extrahiert.

2. Verfahren nach Anspruch 1, dadurch gekennzeichnet, dass man einen hexakoordinierten Siliciumkomplex der allgemeinen Formel IIa verwendet:

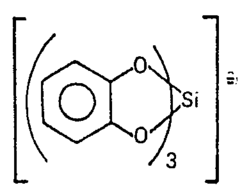

$(p+1)A^{(2-p)\oplus}$ (IIa)

worin:

A ein Alkali- oder Erdalkalimetall bedeutet, und p = 0 oder 1 ist.

3. Verfahren nach Anspruch 1, dadurch gekennzeichnet, dass man einen pentakoordinierten Siliciumkomplex der allgemeinen Formel IIb verwendet:

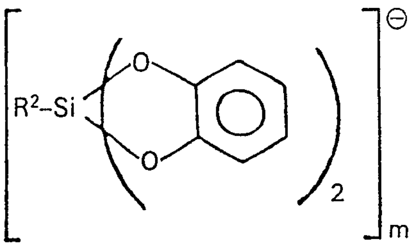 $A^{m\oplus}$ (IIb)

worin:

$R^2$ einen Alkyl-, Alkenyl-, Alkinyl-, Aryl-, Aralkyl-, Aralkenyl-, Aralkinyl-, oder Alkylarylrest bedeutet, bei denen die aliphatischen Reste geradkettig oder verzweigt sind und 1 bis 20 Kohlenstoffatome enthalten,

A ein Alkali- oder Erdalkalimetall bedeutet, und m = 1 oder 2 ist.

4. Verfahren nach Anspruch 1, dadurch gekennzeichnet, dass das Reduktionsmittel ausgewählt wird aus Hydriden wie Lithiumaluminiumhydrid, Diisobutylaluminiumhydrid, Natriumhydrid in Verbindung mit einem Trialkylaluminium, besonders dem Triethylaluminium.

5. Verfahren nach Anspruch 1, dadurch gekennzeichnet, dass das halogenierte Oxidationsmittel ausgewählt wird aus Chlor, Chlorwasserstoffsäure, $PCl_3$, $PCl_5$, $POCl_3$, $SOCl_2$.

## Claims

1. A process for the preparation of hydrogenosilanes or halogenosilanes of the general formula I:

$$R\text{–}Si\,R_3' \qquad (I)$$

wherein:

R denotes a hydrogen or chlorine atom or an alkyl, alkenyl, alkynyl, aryl, aralkyl, aralkenyl, aralkynyl or alkylaryl radical, in which the aliphatic fragments are linear or branched and contain from 1 to 20 carbon atoms;

R′ denotes a hydrogen or chlorine atom, characterised in that a silicon complex of general formula II:

a 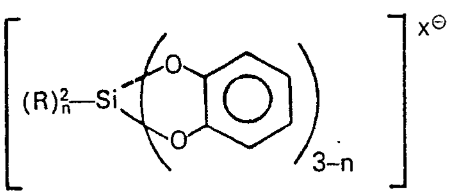 $b\,A^{y\oplus}$

(II)

wherein:

$R^2$ denotes an alkyl, alkenyl, alkynyl, aryl, aralkyl, aralkenyl, aralkynyl or alkylaryl radical, in which the aliphatic fragments are linear or branched and contain from 1 to 20 carbon atoms,

A denotes an alkali metal or an alkaline-earth metal,

n = 0 or 1

a, b, x and y = 1 or 2,

provided that: when n = 0, x = 2
when n = 1, x = 1

and the electric neutrality equation being observed:

$$ax = by$$

is reacted with a reducing agent or a halogenated oxidizing agent in an anhydrous solvent medium and in an inert atmosphere, whereafter acid hydrolysis is carried out, and in that the said formula I compound is extracted.

2. A process according to claim 1, characterised in that a hexacoordinated silicon complex of the general formula IIa is used:

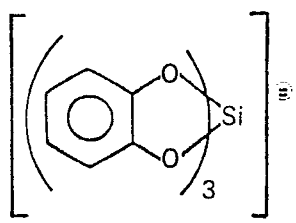 $(p+1)A^{(2-p)\oplus}$ (IIa)

wherein:

A denotes an alkali metal or an alkaline-earth metal and

p = 0 or 1.

3. A process according to claim 1, characterised in that a pentacoordinated silicon compound of the general formula IIb is used:

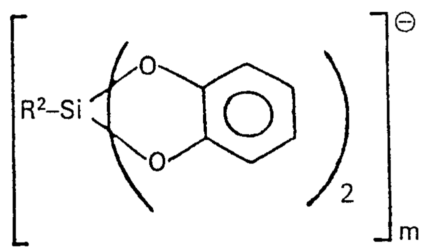 $A^{m\oplus}$ (IIb)

wherein:

$R^2$ denotes an alkyl, alkenyl, alkynyl, aryl, aralkyl, aralkenyl, aralkynyl or alkylaryl radical, in which the aliphatic fragments are linear or branched and contain from 1 to 20 carbon atoms,

A denotes an alkali metal or an alkaline-earth metal and

m = 1 or 2.

4. A process according to claim 1, characterised in that the reducing agent is selected from the hydrides such as lithium aluminohydride, diisobutylaluminium hydride, sodium hydride associated with a trialkylaluminium, more particularly triethylaluminium.

5. A process according to claim 1, characterised in that the halogenated oxidizing agent is selected from chlorine, hydrochloric acid, $PCl_3$, $PCl_5$, $POCl_3$, $SOCl_2$.